# EUROPEAN PATENT APPLICATION

(11) **EP 4 825 710 A1**
(43) Date of publication of application: **21.10.2026**
(21) Application number: 26173074.1
(22) Date of filing: 17.04.2026
(51) Int. Cl.: B62D 35/02

(54) **MOTOR VEHICLE**

(30) Priority: 18.04.2025 IT 202500008850
(71) Applicant: FERRARI S.p.A., 41100 Modena (IT)
(72) Inventor: FAVARETTO, Fabrizio, 41100 MODENA (IT)
(74) Representative: Studio Torta S.p.A.

(57) **Abstract**

A motor vehicle (1) is described, comprising a supporting structure (2) and a plurality of wheels (3a, 3b) rotatable relative to the supporting structure (2). The supporting structure (2) comprises a face (2a), which is adapted to be facing the ground (G) on which the wheels (3a, 3b) rest and which defines a bottom area (7) of the motor vehicle (1). The motor vehicle (1) also comprises a plurality of oblong elements (15). Each oblong element (15) comprises a first end (15a) and a second end (15b), which are arranged opposed to each other along an extension direction (S) of the oblong element (15). Each oblong element (15) is also deformable and fixed to the supporting structure (2) on the side of the face (2a) at its first end (15a); the second end (15b) of each oblong element (15) is, in contrast, free and movable relative to the supporting structure (2).

## Description

### CROSS-REFERENCE TO RELATED APPLICATIONS

This patent application claims priority from Italian patent application no. 102025000008850 filed on April 18, 2025, the entire disclosure of which is incorporated herein by reference.

### TECHNICAL FIELD

This invention relates to a motor vehicle comprising an aerodynamic device.

### BACKGROUND

Motor vehicles are known that essentially comprise:
- a chassis comprising a floor and a plurality of cross members and spars;
- a plurality of wheels that can rotate with respect to the chassis about respective rotation axes; and
- two side skirts or strips, each attached at a respective spar, in particular at a respective sill.

During motion, the skirts and floor define, in a known way, a channel that guides the incident flow through the bottom area of the motor vehicle.

Specifically, each skirt comprises a flat or essentially flat body stretched parallel to the longitudinal extension direction of the motor vehicle. In some motor vehicles, the skirts also project from the respective sills towards the ground on which the wheels rest.

More specifically, the skirts limit the escape of the flow through the bottom area of the motor vehicle transversally to the longitudinal extension direction of the motor vehicle.

In particular, by virtue of the presence of the channel, the flow through the bottom area of the motor vehicle accelerates and, consequently, undergoes a reduction in pressure.

Due to the difference in pressure between the volume defined by the channel and the air outside the channel, the skirts help generate downforce, which presses the motor vehicle towards the ground and improves its grip.

Nevertheless, the known skirts leave room for improvement.

In fact, when the skirts collide with obstacles on the road surface, they tend to rise, favouring the exchange of air between the motor vehicle bottom area and the outside air and reducing the previously established pressure difference. Such an event sometimes induces a substantial and sudden reduction in the motor vehicle's grip and can be dangerous when the motor vehicle's speed is high or when the motor vehicle is travelling along a curve.

There is, therefore, a need to obtain a motor vehicle that enjoys the advantages of using skirts but does not suffer from the disadvantages described above.

One purpose of the invention is to respond to the need described above, preferably in a simple and economical way.

### DESCRIPTION OF THE INVENTION

The purpose is achieved by means of a motor vehicle as defined in claim 1.

The dependent claims define particular embodiments of the invention.

### BRIEF DESCRIPTION OF THE DRAWINGS

Below, an embodiment of the invention is described to better understand the same by way of non-limiting example and with reference to the attached drawings in which:
- Figure 1 is a partial perspective view of a motor vehicle according to the present invention;
- Figure 2 is a detailed view on an enlarged scale of the motor vehicle illustrated in Figure 1; and
- Figure 3 is an additional perspective view, partially from below, of the motor vehicle in Figure 1, with parts removed for clarity.

### EMBODIMENTS OF THE INVENTION

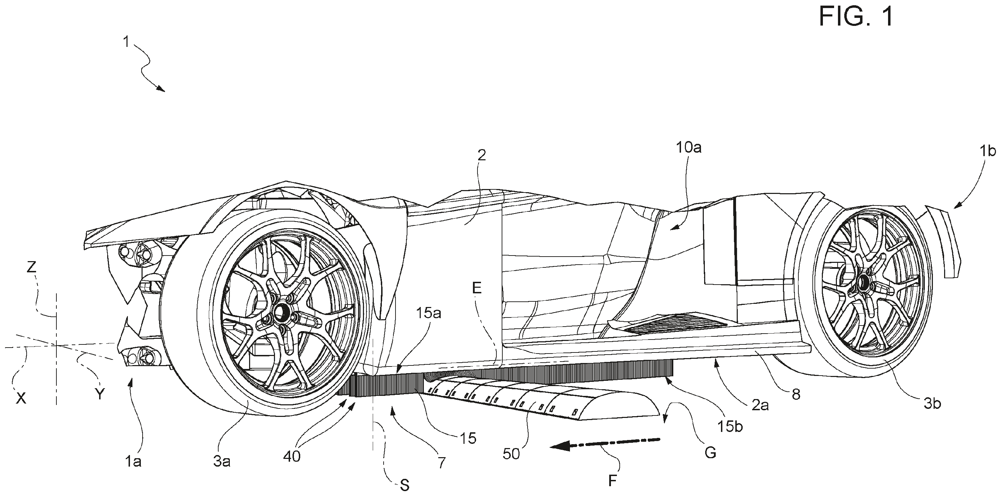

In Figures 1 to 3, the reference number 1 is used to denote, as a whole, a motor vehicle according to the present invention.

The motor vehicle 1 comprises:
- a supporting structure 2, in particular a chassis; and
- a plurality of wheels 3a, 3b that can rotate with respect to the chassis 2 about respective rotation axes.

The motor vehicle 1 can be associated with an integral reference system comprising:
- a longitudinal extension direction X;
- a direction Z transversal to the direction X and vertical to the ground G on which the motor vehicle 1 is resting; and
- a direction Y transversal to the directions X and Z.

The directions X, Y and Z are preferably orthogonal to one another.

Considering a forward direction F of the motor vehicle 1, the motor vehicle 1 also comprises a front portion 1a and a rear portion 1b. The front portion 1a and the rear portion 1b are arranged at respective parts of the motor vehicle 1 opposed to each other in the direction X (Figure 1).

In particular, the motor vehicle 1 comprises two wheels 3a arranged on the side of the front portion 1a and two wheels 3b arranged on the side of the rear portion 1b.

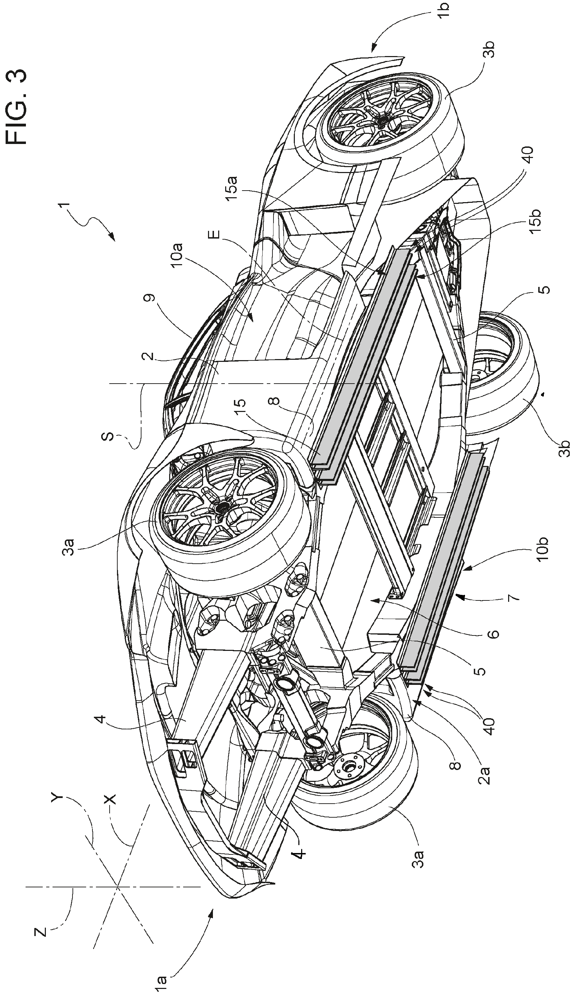

The chassis 2 also comprises, in a known way (Figure 3):
- a plurality of spars 4 extending at least partially parallel to the direction X;
- a plurality of cross members 5 extending transversely to the direction X; and
- a floor 6 arranged at least partially orthogonal to the direction Z.

Specifically, the spars 4 comprise two sills or side spars 8, each arranged at a respective end of the motor vehicle 1 along the direction Y. More specifically, the sills 8 are arranged parallel or substantially parallel to each other. Each sill 8 also lies between one wheel 3a and a respective wheel 3b along the direction X.

The chassis 2 also comprises a face 2a, which is adapted to face the ground G on which the wheels 3a, 3b rest. Specifically, the face 2a defines a bottom area 7 of the motor vehicle 1. More specifically, the face 2a is at least partly defined by the floor 6.

The motor vehicle 1 also comprises (Figure 3):
- a top 9, which faces away from the bottom area 7 in the direction Z; and
- two lateral portions 10a, 10b, extending between the front portion 1a and the rear portion 1b in the direction X and between the top 9 and the bottom area 7 in the direction
Z.

The side portions 10a and 10b are arranged at respective opposed parts of the motor vehicle 1 in the direction Y.

Advantageously, the motor vehicle 1 comprises a plurality of oblong elements 15 extended along respective extension directions S. Each oblong element 15 comprises respective ends 15a, 15b opposed to each other along the respective extension direction S. The oblong elements 15 are deformable, in particular flexible, and fixed to the face 2a of the chassis 2 at the respective ends 15a; the ends 15b of the oblong elements 15 are instead free and movable with respect to the chassis 2.

Specifically, each oblong element 15 can swing around the end 15a about a respective direction E. More specifically, the directions E of the oblong elements 15 lie on a plane orthogonal to the direction Z and/or are parallel to the direction X.

The fact that the oblong elements 15 are extended along their respective extension directions S means that the extension direction S of each oblong element 15 is the main extension direction of each oblong element 15. In other words, the extension of each oblong element 15 along the direction S prevails over the extensions along the other two spatial directions.

Preferably, but not necessarily, at least some of the oblong elements 15 are attached to the sills 8. In detail, at least some of the oblong elements 15 are attached to the sills 8 at the bottom area 7.

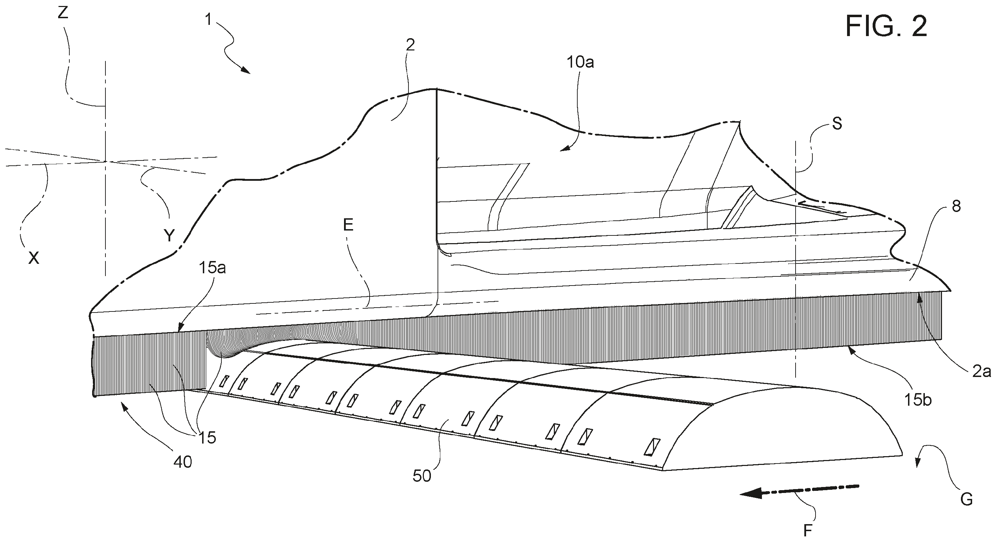

As illustrated by way of example in Figures 1 and 2, the oblong elements 15 are adapted to cooperate in contact with one or more possible obstacles 50 on the ground on which the motor vehicle 1 rests and to deform accordingly.

Specifically, the oblong elements 15 are adapted to rotate, in particular to bend, about their respective directions E according to the forces exchanged with the obstacles 50. More specifically, the oblong elements 15 are adapted to rotate between:
- respective undeformed configurations, in which the respective directions S are parallel or essentially parallel to the direction Z and which are assumed when the oblong elements 15 do not interact and/or are not in contact with the possible obstacle 50;
- respective deformed configurations, in which the respective directions S are transversal to the direction Z and which are assumed when the oblong elements 15 interact and/or are not in contact with the possible obstacle 50.

In the non-limiting embodiment illustrated in Figure 2, the oblong elements 15 in their respective deformed configurations tend to extend for at least part of their extension along their respective directions S in a manner parallel or essentially parallel to the direction Y.

Specifically, the end 15b of each oblong element 15 is free with respect to the chassis 2 both when the oblong element 15 itself is in the relative undeformed configuration and when it is in the relative deformed configuration. More specifically, the ends 15b are movable with respect to their respective ends 15a both when the respective oblong elements 15 themselves are in their relative undeformed configurations and when they are in their relative deformed configurations. In other words, the ends 15b are not directly fixed to the chassis 2.

"Obstacle" 50 is to be understood as a body external to the motor vehicle 1 present in the path of the motor vehicle 1.

In the embodiment illustrated, the obstacle 50 is solid and fixed in relation to the ground G, in particular to the road surface. For example, the obstacle 50 is a traffic island, a footpath or cycle path, a kerb, a road hump or a horizontal road marking element.

Nevertheless, the obstacle 50 may be mobile in relation to the ground G. For example, the obstacle 50 consists of debris, rubbish or abandoned objects.

The obstacle 50 - for at least part of its dimensions - preferably has a height relative to the ground G that is less than or equal to the distance between the bottom area 7 and the ground G along the direction Z.

Specifically, the oblong elements 15 are threadlike or ribbon-like. For example, each oblong element 15 comprises a thread, a bristle or a ribbon.

In the illustrated embodiment, each oblong element 15 has a rectangular shape on a plane defined by the respective directions E and S. In addition, the thickness of each oblong element 15 orthogonally to said plane defined by the respective directions E and S is smaller or much smaller than the dimensions of the oblong element 15 along the directions E and S.

The bristles or ribbons are preferably made of an elastomeric material, e.g. polyurethane or polyethylene.

As illustrated in Figure 3, moreover, the motor vehicle 1 comprises multiple rows 40 of oblong elements 15, the oblong elements 15 being next to each other along the direction X. In detail, each row 40 comprises multiple oblong elements 15 arranged in succession and/or next to each other along respective directions E. In other words, each row 40 resembles a brush (or a paint brush) formed by a multitude of oblong elements 15.

More specifically, in the non-limiting embodiment illustrated, the motor vehicle 1 comprises eight rows 40, four of which are arranged on the side of one of the two sills 8 and the other four of which are arranged on the side of the other of the two sills 8.

The rows 40 are spaced apart according to the direction Y. In addition, the rows 40 illustrated in Figure 3 extend along most of the distance between the front wheels 3a and the rear wheels 3b in the direction X.

In the non-limiting embodiment illustrated, moreover, the rows 40 extend along the same portion of the motor vehicle 1 in the direction X.

More specifically, at each sill 8, the respective four rows 40 are distributed in pairs. The rows 40 of each pair are placed at a first distance from each other according to the direction Y; the pairs are also placed at a second distance from each other according to the direction Y that is greater than the first distance.

The oblong elements 15 preferably have the same or similar colouring as the sills 8 and/or chassis 2 at the face 2a.

In addition, the oblong elements 15 in the undeformed configuration are preferably adapted to be placed at a distance from the ground G of between 10 and 30 mm. This distance preferably ranges between 15 and 25 mm. Even more preferably, this distance is 20 mm.

More specifically, the distance is measured in the direction Z, in particular between the ends 15b and the ground G. In addition, the distance is preferably measured with the vehicle at curb weight (OdM).

The operation of the motor vehicle 1 is described below.

When running, the motor vehicle 1 is hit by a flow of air that breaks against the front portion 1a and divides into a portion flowing along the bottom area 7 and a portion flowing along the top 9.

In particular, the portion of the flow through the bottom area 7 essentially flows from the front portion 1a to the back portion 1b. As it traverses the bottom area, the outflow from the bottom area 7 at the side portions 10a and 10b is limited by the oblong elements 15.

Also by virtue of the presence of the oblong elements 15, a pressure difference arises between the air flowing below the bottom area 7 and the air present outside the motor vehicle 1 and not passing below the bottom area 7. This results in downforce, which presses the motor vehicle 1 towards the ground G and helps to ensure adhesion with the ground G.

When an obstacle 50 is present along the trajectory of the motor vehicle 1, the oblong elements 15 interact with this obstacle 50, bending accordingly.

Specifically, the oblong elements 15 interacting with the obstacle 50 rotate about their respective directions E. More specifically, during motor vehicle 1 motion, different portions of the rows 40 are deformed along the direction X, while the oblong elements 15 belonging to the remaining portions of the rows 40 remain in their respective undeformed configurations.

In detail, by virtue of the fact that the motor vehicle 1 comprises numerous rows 40, different pressure values tend to be established in the space between the rows 40 along the direction Y. In particular, at the space between the pairs of rows 40 closer to the side portions 10a, 10b, greater pressure values tend to be established than at the space between the pairs of rows 40 further away from the side portions 10a, 10b in the direction Y. In other words, the rows 40 define respective channels for the flow passing below the bottom area 7.

From the above, the advantages of this invention are clear.

In particular, the motor vehicle 1 comprises the oblong elements 15, which are fixed to the chassis 2 in the space between the bottom area 7 and the ground G. On the one hand, this makes it possible to enjoy the same advantages of the known skirts in terms of downforce acting on the motor vehicle 1, and, on the other hand, to avoid the drawbacks to which the skirts are subject in the event of collision with obstacles present on the road surface.

In detail, the oblong elements 15 that come into contact with the obstacles 50, becoming deformed, are able to bypass the obstacles 50 preventing the pressure difference between the bottom area 7 and the outside air from decreasing dramatically and significantly. In fact, the oblong elements 15 not in contact with the obstacles 50 do not deform and continue to limit the portion of flow escaping from the bottom area 7 transversally to the direction X.

Consequently, the oblong elements 15 make it possible to limit the risk of loss of grip in the event of an obstacle 50 in the path of the motor vehicle 1, especially when the motor vehicle's speed is high or when the motor vehicle is travelling through a curve.

In addition, the motor vehicle 1 comprises several rows 40 formed by the oblong elements 15, which define respective channels between one another the flow passing below the bottom area 7. The outflow from the volume below the bottom area 7 from the side portions 10a and 10b is hindered by the existence of these channels, which make the air path to the side portions 10a, 10b tortuous. In detail, the set of rows 40 and the portions of the bottom area 7 bounded by the rows 40 is comparable to a labyrinth seal.

Since the distance along the direction Z between the oblong elements 15 and the ground G is between 10 and 30 mm, it is possible to limit the grazing between the oblong elements 15 and the ground G and at the same time to limit the amount of flow escaping from the bottom area 7 transversely to the direction X. In fact, continuous scraping between the oblong elements 15 and the ground G would tend to cause the progressive consumption of the oblong elements 15 and the uplift and dispersion of dust and debris from the road. On the other hand, too large distances between the oblong elements 15 and the ground G would not allow the oblong elements 15 to effectively maintain the desired pressure difference between the air present below the bottom area 7 and the outside air.

In addition, since the oblong elements 15 are flexible, they are not taken into account in the calculation of the ground clearance of the motor vehicle 1 in the approval processes. In fact, the approval requirements, which impose a minimum distance between the bottom area 7 and the ground G, stipulate that the ground clearance is calculated with respect to the chassis 2 and not with respect to flexible portions of the motor vehicle.

Since the oblong elements 15 have the same or similar colouring as the sills 8 and/or face 2a, they can be camouflaged without altering the overall appearance of the motor vehicle 1.

Finally, it is clear that changes may be made to the motor vehicle 1 according to the invention, and variations produced thereto, that, in any case, do not depart from the scope of protection defined by the claims.

The motor vehicle 1 could also comprise a number of rows 40 other than eight. In particular, the motor vehicle 1 could comprise fewer than eight rows 40 or more than eight rows 40.

The motor vehicle 1 could also comprise multiple rows 40 not fixed at the sills 8, but distributed along all or most of the area of the face 2a and spaced apart from one another along the direction Y. In particular, some rows 40 could be arranged in a region of the face 2a interposed between the sills 8 along the direction Y.

All or some rows 40 and/or part of them may not be arranged parallel to the direction X but may be arranged transversal to the direction X. The rows 40 may have a curved profile on a plane orthogonal to the direction Z.

Alternatively or in addition, at least some rows 40 could extend along respective different portions of the motor vehicle 1 along the direction X.

The oblong elements 15 could also be configured to deform around a direction orthogonal to their respective directions E and S.

## Claims

1. A motor vehicle (1) comprising:
- a supporting structure (2);
- a plurality of wheels (3a, 3b) rotatable relative to said supporting structure (2) about respective rotational axes;
said supporting structure (2) comprising a face (2a), which is adapted to be facing the ground (G) on which said wheels (3a, 3b) rest, in use, and which defines a bottom area (7) of said motor vehicle (1);
**characterized by** comprising a plurality of oblong elements (15);
each said oblong element (15) comprising a first end (15a) and a second end (15b), which are arranged opposed to each other along an extension direction (S) of the oblong element (15);
each said oblong element (15) being deformable and fixed to the supporting structure (2) on the side of said face (2a) at said first end (15a); wherein said second end (15b) of each said oblong element (15) is free and movable relative to said supporting structure (2).

2. The motor vehicle according to claim 1, wherein each said oblong element (15) is threadlike or ribbon-like.

3. The motor vehicle according to claim 1 or 2, wherein said extension direction (S) of each oblong element (15) is the main and/or prevailing direction of said oblong element (15).

4. The motor vehicle according to any of the preceding claims, defining a first direction (Z), which is vertical, in use, with respect to the ground (G);
wherein said oblong elements (15) are rotatable about respective second directions (E) between:
- respective undeformed configurations, wherein the respective extension directions (S) are parallel or substantially parallel to said first direction (Z);
- respective deformed configurations, wherein the respective extension directions (S) are transversal to said first direction (Z);
said oblong elements (15) being configured to assume the respective said deformed configurations when they interact, in use, with an obstacle (50).

5. The motor vehicle according to claim 4, wherein said second end (15b) of each said oblong element (15) is free in relation to said supporting structure (2) both when said oblong element (15) is in the relative undeformed configuration and when it is in the relative deformed configuration.

6. The motor vehicle according to claim 4 or 5, wherein, in use, the distance between said oblong elements (15) and said ground (G) along said first direction (Z) is between 10 mm and 30 mm.

7. The motor vehicle according to claim 6, wherein said distance is between 15 mm and 25 mm.

8. The motor vehicle according to any one of claims 4 to 7, comprising a plurality of rows (40) of said oblong elements (15);
wherein the oblong elements (15) that belong to the same row (40) are arranged side by side and/or aligned to one another along said respective second directions (E).

9. The motor vehicle according to claim 8, defining a third direction (X) of longitudinal extension, which is transversal to said first direction (Z) and a fourth direction (Y), which is transversal to said first direction (Z) and said third direction (X);
wherein said rows (40) are spaced apart from one another along said fourth direction (Y).

10. The motor vehicle according to claim 8 or 9, wherein the oblong elements (15) of each of said row (40) are arranged in a manner analogous to the bristles of a brush or a paintbrush and/or wherein each of said row (40) is a brush formed by said oblong elements (15).

11. The motor vehicle according to any one of claims 8 to 10, wherein said second directions (E) lie on a plane that is orthogonal to said first direction (Z) and/or are parallel to said third direction (X).

12. The motor vehicle according to any one of the preceding claims, wherein said supporting structure (2) comprises at least two sills or side spars (8); at least some of said oblong elements (15) being fixed at said sills (8).

13. The motor vehicle according to claim 12 when dependent on any of claims 9 to 11, wherein said two sills (8) are spaced apart from each other along said fourth direction (Y);
wherein said oblong elements (15) of at least one said row (40) are fixed to said face (2a) in a region of said face (2a) that is interposed between said sills (8) along said fourth direction (Y).

14. The motor vehicle according to any one of the preceding claims, wherein said oblong elements (15) have the same or a similar colouring to said face (2a) and/or said supporting structure (2).
